# EUROPEAN PATENT APPLICATION

(11) **EP 2 809 036 A1**
(43) Date of publication of application: **03.12.2014**
(21) Application number: 12871013.4
(22) Date of filing: 19.10.2012
(51) Int. Cl.: H04L 12/70

(54) **METHOD AND DEVICE FOR ESTABLISHING MULTICAST PATH**

(30) Priority: 16.03.2012 CN 201210071416
(71) Applicant: Huawei Technologies Co., Ltd, Shenzhen, Guangdong 518129 (CN)
(72) Inventor: LI, Zhenbin, Shenzhen Guangdong 518129 (CN); HUANG, Tieying, Shenzhen Guangdong 518129 (CN)
(74) Representative: Pfenning, Meinig & Partner GbR
(86) International application number: PCT/CN2012/083176
(87) International publication number: WO 2013/135046

(57) **Abstract**

Embodiments of the present invention disclose a method and an apparatus for establishing a multicast path. The method includes: when computing a multicast branch path to a first leaf node by using a constraint fails, degrading the constraint to obtain a secondary constraint; computing a multicast branch path to the first leaf node according to the secondary constraint; and establishing a multicast branch path to the first leaf node according to the multicast branch path obtained by computation. By using the method and apparatus for establishing a multicast path according to the embodiments of the present invention, for a leaf node to which a multicast path cannot be established according to a primary constraint, a substitute multicast path is established according to a secondary constraint, which ensures that service traffic can reach all leaf nodes in a multicast service and that the multicast service for the leaf nodes is quickly recovered when a fault occurs.

## Description

### TECHNICAL FIELD

The present invention relates to communications technologies, and in particular, to a method and an apparatus for establishing a multicast path.

### BACKGROUND

Currently, multicast applications mainly include IPTV (Internet Protocol Television, Internet Protocol television), multimedia conferencing, real-time online gaming, and so on. A common feature of the multicast applications is that strict requirements are imposed on network QoS (Quality of Service, quality of service) and reliability.

In implementation of a multicast application requiring high QoS, a P2MP (Point-to-Multipoint, point-to-multipoint) TE (Traffic Engineer, traffic engineering) tree needs to be established in a network. In a current situation, before a P2MP TE tree is established and on a root node of the P2MP TE tree, path computation is first performed based on path constraints (such as bandwidth, a color, and a hop limit) required by a user.

During implementation of the present invention, the inventor finds that the prior art has at least the following problem:

When a P2MP TE tree is established, a case may occur in which paths to some leaf nodes are computed successfully but paths to other leaf nodes fail to be computed; in addition, a case may also occur in which paths to some leaf nodes in an established P2MP TE tree are faulty. In the foregoing scenarios, the leaf nodes cannot receive traffic sent by a root node, which affects user experience, but no method is available to resolve the problem in the prior art.

### SUMMARY

To resolve the problem in the prior art, an embodiment of the present invention provides a method for establishing a multicast path, where the method includes:
when computing a multicast branch path to a first leaf node by using a constraint fails, degrading the constraint to obtain a secondary constraint;
computing a multicast branch path to the first leaf node according to the secondary constraint; and
establishing a multicast path to the first leaf node according to the multicast branch path obtained by computation.

An embodiment of the present invention further provides an apparatus for establishing a multicast path, where the apparatus includes:
a secondary constraint generating unit, configured to degrade, when computing a multicast branch path to a first leaf node by using a constraint fails, the constraint to obtain a secondary constraint;
a multicast branch path computing unit, configured to compute a multicast branch path to the first leaf node according to the secondary constraint; and
a multicast branch path establishing unit, configured to establish a multicast path to the first leaf node according to the multicast branch path obtained by computation.

By using the method and apparatus for establishing a multicast path according to the embodiments of the present invention, when a network cannot meet a requirement that all multicast paths to all leaf nodes should be established according to a primary constraint or when an established multicast branch path is faulty, for a leaf node to which a multicast path cannot be established according to the primary constraint, a substitute multicast path is established according to a secondary constraint, which ensures that service traffic can reach all leaf nodes in a multicast service and that the multicast service for the leaf nodes is quickly recovered when a fault occurs.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for establishing a multicast path according to Embodiment 1 of the present invention;
FIG 2 is a schematic topological diagram of a multicast network to which an embodiment of the present invention is applied; and
FIG 3 is a schematic structural diagram of an apparatus for establishing a multicast path according to Embodiment 2 of the present invention.

### DESCRIPTION OF EMBODIMENTS

To make the objectives, technical solutions, and advantages of the present invention clearer, the following further describes the embodiments of the present invention in detail with reference to the accompanying drawings.

### Embodiment 1

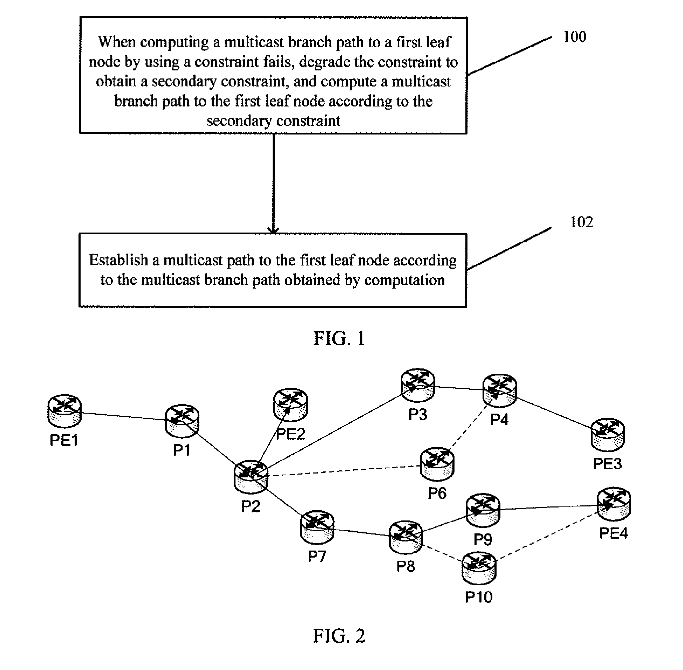

As shown in FIG 1, this embodiment provides a method for establishing a multicast path, where an executor of the method may be a root node in a P2MP TE network. The method includes the following steps:

100. When computing a multicast branch path to a first leaf node by using a constraint fails, degrade the constraint to obtain a secondary constraint, and compute a multicast branch path to the first leaf node according to the secondary constraint.

Referring to FIG 2, a P2MP multicast tree shown by solid lines has been established between a root node PE1 and leaf nodes PE2, PE3, and PE4 of the P2MP multicast tree. Assuming that the PE3 is a first leaf node, when a branch path from the PE1 to the PE3 of the P2MP multicast tree is faulty, for example, when a multicast path from a P2 to a P3 is faulty, in the prior art, only a primary constraint applicable to all nodes in a multicast service is used to recompute a multicast path to the leaf node where a multicast path fault occurs. In this embodiment, when the P2MP multicast branch path from the root node PE1 to the first leaf node PE3 is faulty, whether there is another multicast branch path to the first leaf node, which meets the primary constraint, may be computed according to the primary constraint. If there is no another multicast branch path to the first leaf node, which meets the primary constraint, the primary constraint currently used for establishing the P2MP multicast tree is degraded to obtain a secondary constraint, and then whether there is a P2MP multicast branch path to the PE3, which meets the secondary constraint, is computed according to the obtained secondary constraint. Alternatively, when the P2MP multicast branch path from the root node PE1 to the first leaf node PE3 is faulty, the primary constraint currently used for establishing the P2MP multicast tree is directly degraded to obtain a secondary constraint, and then whether there is a P2MP multicast branch path to the PE3, which meets the secondary constraint, is computed according to the obtained secondary constraint. Generally, primary constraints used for establishing a P2MP multicast tree include constraints such as a color, bandwidth, and a hop limit (hop-limit). In this embodiment, degrading a constraint refers to lowering a requirement on the constraint for establishing a multicast path, for example, lowering a bandwidth required for establishing the multicast path, lowering a limit to a color of the multicast path, and lowering a limit to a hop limit (hop-limit) of the multicast path. In this embodiment, for example, the secondary constraint may be obtained according to a configured constraint degradation policy, where the constraint degradation policy may be configured, for example, on the root node of the multicast tree. The constraint degradation policy specifically specifies how to degrade a constraint, for example, how to lower a bandwidth requirement, how to lower a color limit, and how to lower a limit to a hop limit (hop-limit), and may further include information about how to perform a subsequent degrade operation in a case in which there is no multicast branch path meeting the secondary constraint obtained by degradation yet after the degradation. For example, within a set time, if computing, by using the secondary constraint obtained by degradation, a multicast branch path to the leaf node where the multicast path fault occurs, fails for multiple times, that is, if it is found by computation, that there is no multicast branch path to the leaf node where the multicast path fault occurs, which meets the used secondary constraint, a requirement on at least one constraint in current secondary constraints may be further lowered to obtain a new secondary constraint, and then the new secondary constraint is used to compute whether there is a multicast branch path to the first leaf node. For example, when computing, by using a secondary constraint obtained by degrading the bandwidth, a multicast branch path to the leaf node where the multicast path fault occurs, fails, a color constraint is further degraded to obtain a new secondary constraint, and then the new secondary constraint is used to compute a multicast branch path to the leaf node where the multicast path fault occurs.

In this embodiment, in an extreme case in which a constraint is degraded, all constraints in the primary constraints may be deleted to compute a multicast branch path to the leaf node where the multicast path fault occurs, that is, the multicast branch path to the leaf node where the multicast path fault occurs is computed without using any constraint. A person skilled in the art may understand that there are multiple optional manners of degrading a constraint. A person skilled in the art may combine the manners of degrading constraints such as bandwidth, a color, and/or a hop limit to obtain different secondary constraints, which is not described herein again.

The case in which a multicast branch path to the first leaf node fails to be computed by using a constraint may also occur during an initial establishment of the P2MP multicast tree. Herein, the failure of computing a multicast branch path to the first leaf node by using the constraint means that it is found by computation, that there is no multicast branch path to the leaf node where the multicast path fault occurs, which meets the used constraint. During the initial establishment of the P2MP multicast tree, when a primary constraint is used to compute the P2MP multicast tree between the root node PE1 and the leaf nodes PE2, PE3, and PE4, if multicast paths meeting the primary constraint exist from the root node PE1 to the leaf node PE2 and from the root node PE1 to the leaf node PE4, but no multicast path meeting the primary constraint exists from the PE1 to the PE3, the primary constraint currently used for establishing the P2MP multicast tree may be degraded to obtain a secondary constraint, and then whether there is a P2MP multicast branch path to the PE3, which meets the secondary constraint, is computed. A constraint degradation policy for obtaining the secondary constraint in the scenario is the same as the constraint degradation policy in the scenario in which a branch path of the foregoing multicast tree is faulty, which is not described herein again.

Further, whether a leaf node supports constraint degradation may be advertised, to a root node, by the leaf node by using an extended BGP (Border Gateway Protocol, Border Gateway Protocol). For example, whether the leaf node supports the constraint degradation may be advertised by using NLRI (Network Layer Reachability Information, network layer reachability information) in a BGP Update (update) message. For example, a flag bit may be set in a reserved field of flags (Flags) in a provider multicast service interface tunnel attribute PMSI (Provider Multicast Service Interface) Tunnel Attribute in the NLRI, to indicate whether the constraint degradation may be performed for a multicast path to the node. When computing a multicast branch path to the first leaf node by using the constraint fails, the root node of the multicast tree decides, according to the information about whether the leaf node supports constraint degradation advertised by the first leaf node, whether to degrade the currently used constraint to obtain a secondary constraint for computing a multicast branch path to the first leaf node.

102. Establish a multicast path to the first leaf node according to the multicast branch path obtained by computation.

If a multicast branch path to the first leaf node, which meets the secondary constraint, is computed by using the secondary constraint, a multicast branch path to the first leaf node is established according to the computed multicast branch path. For example, an S2L SUB-LSP (Source-to-Leaf sub-Label Switched Path, source-to-leaf sub-label switched path) to the first leaf node is established. After the S2L SUB-LSP is established successfully, a root node may send multicast service traffic destined for the first leaf node through the established S2L SUB-LSP.

In this embodiment, carrying information about one or more leaf nodes in a path Path or reserve Resv message by using a message merging/splitting mechanism is supported. Specifically, in a manner in which the existing RSVP-TE protocol is not extended, it is required that information about leaf nodes having a same path constraint can be sent in a same Path or Resv message, and information about leaf nodes having different path constraints is not allowed to be sent in a same Path or Resv message. The sending manner in the message merging/splitting mechanism may reduce the number of messages to be sent and save resources.

In this embodiment, an extended RSVP-TE protocol path Path message may also be used to establish the multicast path computed according to the secondary constraint. In this embodiment, in addition to the primary constraint applied to the P2MP multicast tree to which the leaf node belongs, the extended Path message also carries the secondary constraint used by the computed multicast branch path to the leaf node. For example, in the Path message, a [<SESSION_ATTRIBUTE>] object may be newly added to carry color information in the secondary constraint used for the multicast branch path to be established, and a [<SENDER_TSPEC>] object may be newly added to carry bandwidth information in the secondary constraint used for the multicast path to be established. For example, when there is no limit to a color constraint or bandwidth constraint, a value of a color object or bandwidth object newly added to the Path message may be set to 0, indicating that no requirement is imposed on the color and bandwidth performance of the path. The extended Path message may carry leaf information of one leaf node, a primary constraint and a secondary constraint applied to the leaf node, or may also carry leaf information of multiple leaf nodes, a secondary constraint applied to each leaf node, and a primary constraint applied to the leaf nodes.

For example, the following Path message may be used to carry a secondary constraint:

```
          <Path Message> ::= <Common Header> [ <INTEGRITY> ]
                  [ [<MESSAGE_ID_ACK> | <MESSAGE_ID_NACK>] ...]
                  [<MESSAGE_ID> ]
                   <SESSION> <RSVP_HOP>
                   <TIME_VALUES>
                  [ <EXPLICIT_ROUTE> ]
                   <LABEL_REQUEST>
                  [ <PROTECTION> ]
                  [ <LABEL_SET>... ]
          [ <SESSION_ATTRIBUTE> ] (carrying color information in the primary
          constraint)
                  [ <NOTIFY_REQUEST> ]
                               [ <ADMIN_STATUS> ]
                    [ <POLICY_DATA> ... ]
                    <sender descriptor> (carrying bandwidth information in the
                    primary constraint)
                    [<S2L sub-LSP descriptor list>]
                    <S2L sub-LSP descriptor list> ::= <S2L sub-LSP descriptor>
                    [ <S2L sub-LSP descriptor list> ]
                    <S2L sub-LSP descriptor> ::= <S2L_SUB_LSP> (identifying a
                    leaf node to which a secondary constraint is applied)
                    [ <P2MP SECONDARY_EXPLICIT_ROUTE> ]
          [<SESSION_ATTRIBUTE>] (carrying color information in the secondary
          constraint)
                    [<SENDER_TSPEC>] (carrying bandwidth information in the
                    secondary constraint);
```

In the foregoing Path message, <S2L sub-LSP descriptor> ::= <S2L _SUB_LSP> may identify leaf node information carrying the secondary constraint, and [<SESSION_ATTRIBUTE>] and [<SENDER_TSPEC>] after <S2L sub-LSP descriptor> ::= <S2L_SUB_LSP> are objects newly added for carrying the secondary constraint, where [<SESSION_ATTRIBUTE>] is used to carry color information in the secondary constraint, and [<SENDER_TSPEC>] is used to carry bandwidth information in the secondary constraint. The remaining fields are fields specified in the existing protocol, which are not described herein again. If it is necessary to carry node information of multiple leaf nodes, the following information may be added to the Path message:

```
          <S2L sub-LSP descriptor> ::= <S2L_SUB_LSP> (identifying a leaf node
          to which a secondary constraint is applied)
                 [ <P2MP SECONDARY_EXPLICIT_ROUTE> ]
            [<SESSION_ATTRIBUTE>] (carrying color information in the
            secondary constraint)
                  [<SENDER_TSPEC>] (carrying bandwidth information in the
                  secondary constraint);
          <S2L sub-LSP descriptor> ::= <S2L_SUB_LSP> identifies information
          about a leaf node to which the secondary constraint is applied,
          [<SESSION_ATTRIBUTE>] is used to carry color information in the secondary
          constraint, and [<SENDER_TSPEC>] is used to carry bandwidth information in the
          secondary constraint.
```

Further, if the first leaf node and the root node of the multicast tree in which the first leaf node is located belong to different topological domains, a multicast branch path to the first leaf node needs to be computed, according to the secondary constraint, by a boundary node of a topological domain in which the first leaf node is located. For example, in a case in which the boundary node is an ASBR (Autonomous System Border Router, autonomous system boundary router), the multicast branch path to the first leaf node according to the secondary constraint continues to be computed by the ASBR of the topological domain in which the first leaf node is located.

Still further, when the secondary constraint is used, when an intermediate node uses the secondary constraint to compute a path, a case of Remerging (remerging) and Cross-over (cross-over) may occur, that is, when a current node receives same service traffic sent by upstream nodes on different paths, the method provided by this embodiment further includes: discarding traffic sent by an upstream node on the path that is obtained by computation by using the secondary constraint and that is among the different paths, or pruning the path obtained by computation by using the secondary constraint from the different paths.

Further, the method for establishing a multicast path according to the embodiment may further include the following step:

103. When there is a multicast branch path to the first leaf node, which meets the primary constraint, switch multicast service traffic destined for the first leaf node, from the multicast branch path computed according to the secondary constraint, to the multicast branch path meeting the primary constraint.

Specifically, the following two manners may be used to determine whether there is a multicast branch path meeting the primary constraint in the network.

### Manner 1:

At a predetermined time interval, compute, according to the primary constraint, whether there is a multicast branch path to the first leaf node, which meets the primary constraint; and when there is a multicast branch path meeting the primary constraint, switch the multicast service traffic destined for the first leaf node, from the multicast branch path computed according to the secondary constraint, to the multicast branch path meeting the primary constraint.

For example, a timer may starts at a P2MP root node for a leaf node to which a substitute path is established by using the secondary constraint, and multicast path computation is performed at the predetermined time interval and according to the primary constraint. Once a multicast branch path to the leaf node, which meets the primary constraint, is computed, a corresponding multicast path is established. After a state of the established multicast path is UP (normal), the multicast service traffic destined for the leaf node is switched to the established multicast path meeting the primary constraint, and then the multicast path that is originally established according to the secondary constraint is torn down, thereby implementing a smooth seamless switch of the multicast service traffic.

### Manner 2:

TE link information in the network is acquired by using the IGP (Interior Gateway Protocols, Interior Gateway Protocol). When the TE link information changes, whether there is a multicast path to the leaf node to which a multicast path is established by using the secondary constraint, is computed according to the primary constraint. When there is a multicast path meeting the primary constraint, the multicast service traffic destined for the leaf node to which a multicast path is established by using the secondary constraint is switched from the multicast branch path computed according to the secondary constraint, to the multicast path meeting the primary constraint. For example, the foregoing TE link information includes information such as bandwidth of a link and a color of a link in the network.

Specifically, the IGP protocol may be used to advertise MPLS (Multiprotocol Label Switching, multiprotocol label switching) TE link information in the network. When a root node knows, through the IGP, that the MPLS TE link information in the multicast network changes, whether there is a path meeting the primary constraint is recomputed for the leaf node to which a path is established by using the secondary constraint. If there is a path meeting the primary constraint, a corresponding multicast path is established. After a state of the multicast path is UP (normal), the multicast service traffic is switched to the established multicast path meeting the primary constraint, and then the multicast path that is originally established according to the secondary constraint is torn down.

By using the method for establishing a multicast path according to the embodiment of the present invention, when a network cannot meet a requirement that all multicast paths to all leaf nodes should be established according to a primary constraint or when an established multicast branch path is faulty, for a leaf node to which a multicast path cannot be established according to the primary constraint, a substitute multicast path is established according to a secondary constraint, which ensures that service traffic can reach all leaf nodes in a multicast service and that the multicast service for the leaf nodes is quickly recovered when a fault occurs.

### Embodiment 2

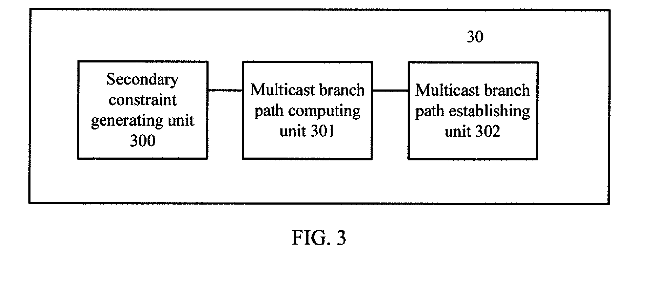

As shown in FIG 3, this embodiment provides an apparatus for establishing a multicast path. The apparatus may be an apparatus 30 on a root node in a P2MP topological network or a root node belonging to a P2MP topological network. The apparatus includes:
a secondary constraint generating unit 300, configured to degrade, when computing a multicast branch path to a first leaf node by using a constraint fails, the constraint to obtain a secondary constraint;
a multicast branch path computing unit 301, configured to compute a multicast branch path to the first leaf node according to the secondary constraint; and
a multicast branch path establishing unit 302, configured to establish a multicast path to the first leaf node according to the multicast branch path obtained by computation.

Referring to FIG 2, a P2MP multicast tree shown by solid lines has been established between a root node PE1 and leaf nodes PE2, PE3, and PE4 of the P2MP multicast tree. Assuming that the PE3 is a first leaf node, this embodiment is described by using an example in which the apparatus 30 for establishing a multicast path is the root node PE1. When a branch path from the PE1 to the PE3 of the P2MP multicast tree is faulty, for example, when a multicast path from a P2 to a P3 is faulty, in the prior art, only a primary constraint applicable to all nodes in a multicast service is used to recompute a multicast path to the leaf node where a multicast path fault occurs. In this embodiment, when the P2MP multicast branch path from the root node PE1 to the first leaf node PE3 is faulty, the multicast branch path computing unit 301 may compute, according to the primary constraint, whether there is another multicast branch path to the first leaf node, which meets the primary constraint. If there is no another multicast branch path to the first leaf node, which meets the primary constraint, the secondary constraint generating unit 300 degrades the constraint to obtain a secondary constraint, and the multicast branch path computing unit 301 computes, according to the obtained secondary constraint, whether there is a P2MP multicast branch path to the PE3, which meets the secondary constraint. Alternatively, when the P2MP multicast branch path from the root node PE1 to the first leaf node PE3 is faulty, the secondary constraint generating unit 300 directly degrades the constraint to obtain a secondary constraint, and the multicast branch path computing unit 301 computes, according to the obtained secondary constraint, whether there is a P2MP multicast branch path to the PE3, which meets the secondary constraint. Generally, primary constraints used for establishing a P2MP multicast tree include constraints such as a color, bandwidth, and a hop limit (hop-limit). When the primary constraint is degraded, the secondary constraint generating unit 300 may lower a requirement on one or more constraints in the primary constraints, for example, one or more of lowering a bandwidth requirement, lowering a color limit, and lowering a limit to a hop limit (hop-limit), thereby obtaining the secondary constraint. In a case in which there is no multicast branch path meeting the secondary constraint obtained by degradation yet after the degradation is performed once, the existing secondary constraint may be further degraded. For example, within a set time, if computing, by using the secondary constraint obtained by degradation, a multicast path to the leaf node where the multicast path fault occurs, fails for multiple times, a requirement on at least one constraint in current secondary constraints may be further lowered to obtain a new secondary constraint, and then the new secondary constraint is used to compute a substitute path to the first leaf node. For example, when computing, by using a secondary constraint obtained by degrading the bandwidth, a multicast path to the leaf node where the multicast path fault occurs, fails, the secondary constraint generating unit 300 further degrades a color constraint to obtain a new secondary constraint, and then uses the new secondary constraint to compute a multicast path to the leaf node where the multicast path fault occurs.

For example, the secondary constraint generating unit 300 specifically includes a constraint degradation policy subunit and a secondary constraint generating subunit. The constraint degradation policy subunit is configured to configure a constraint degradation policy; and the secondary constraint generating subunit is configured to generate a secondary constraint according to the configured constraint degradation policy. The constraint degradation policy specifically specifies a policy for degrading a constraint, for example, how to lower a bandwidth requirement, how to lower a color limit, and how to lower a limit to a hop limit (hop-limit), and may further include information about how to perform a subsequent degrade operation in a case in which there is no multicast branch path meeting the secondary constraint obtained by degradation yet after the degradation is performed once. For example, within a set time, if computing, by using the secondary constraint obtained by degradation, a multicast path to the leaf node where the multicast path fault occurs, fails for multiple times, a requirement on at least one constraint in current secondary constraints may be further lowered to obtain a new secondary constraint, and then the new secondary constraint is used to compute a substitute path to the first leaf node. For example, when computing, by using a secondary constraint obtained by degrading the bandwidth, a multicast path to the leaf node where the multicast path fault occurs, fails, a color constraint is further degraded to obtain a new secondary constraint, and then the new secondary constraint is used to compute a multicast path to the leaf node where the multicast path fault occurs.

In this embodiment, in an extreme case in which a constraint is degraded, all constraints in the primary constraints may be deleted to compute a multicast path to the leaf node where the multicast path fault occurs, that is, the multicast path to the leaf node where the multicast path fault occurs is computed without using any constraint. A person skilled in the art may understand that there are multiple optional manners of degrading a constraint. A person skilled in the art may combine the foregoing manners of degrading constraints such as bandwidth, a color, and/or a hop limit to obtain different secondary constraints, which is not described herein again.

For example, the multicast branch path establishing unit 302 specifically includes a Path message extending subunit, a Path message sending subunit, and a RESV message receiving subunit. The Path message extending subunit is configured to generate an extended Path message, where in addition to the primary constraint applied to the P2MP multicast tree to which the leaf node belongs, the extended Path message also carries the secondary constraint used by the computed multicast branch path to the leaf node. For example, in the Path message, a [<SESSION_ATTRIBUTE>] object may be newly added to carry color information of the multicast path to be established, and a [<SENDER_TSPEC>] object may be added to carry bandwidth information of the multicast path to be established. For example, when there is no limit to a color constraint or bandwidth constraint, a value of a color object or bandwidth object newly added to the Path message may be set to 0, indicating that no requirement is imposed on the color and bandwidth performance of the path. The extended Path message may carry leaf information of one leaf node, and a primary constraint and a secondary constraint applied to the leaf node, or may also carry leaf information of multiple leaf nodes, a secondary constraint for establishing a multicast branch path to each leaf node among the leaf nodes, and a primary constraint to which the leaf nodes are applied. The Path message sending subunit is configured to send the generated Path message, which carries the secondary constraint, to a leaf node to which a multicast branch path is to be established. The RESV message receiving subunit is configured to receive a RESV message. When a success response RESV message for the Path message sent by the Path message sending subunit is received, the multicast branch path to the leaf node is established successfully.

For another example, the multicast branch path establishing unit 302 specifically includes a Path message generating subunit, a Path message sending subunit, and a RESV message receiving subunit. The Path message generating subunit is configured to generate a Path message, which carries the secondary constraint used by the computed multicast branch path to the leaf node, where the Path message may be a Path message compliant with the existing protocol. The Path message sending subunit is configured to send the generated Path message, which carries the secondary constraint, to a leaf node to which a multicast branch path is to be established. The RESV message receiving subunit is configured to receive a RESV message. When a success response RESV message for the Path message sent by the Path message sending subunit is received, the multicast branch path to the leaf node is established successfully.

Further, the apparatus for establishing a multicast path in this embodiment further includes a multicast branch path switching unit, configured to switch, when there is a multicast branch path to the first leaf node, which meets the primary constraint, multicast service traffic destined for the first leaf node, from the multicast branch path computed according to the secondary constraint, to the multicast branch path meeting the primary constraint.

For example, the multicast branch path switching unit may specifically include a timer subunit and a multicast branch path switching subunit. The timer subunit is configured to provide, after the multicast branch path establishing unit establishes the multicast path to the first leaf node according to the multicast branch path obtained by computation, a timing signal for the multicast branch path computing unit according to a predetermined time interval; the multicast branch path computing unit is further configured to compute a multicast branch path to the first leaf node according to the primary constraint after receiving the timing signal sent by the timer subunit; and the multicast branch path switching subunit is configured to switch, when a multicast branch path to the first leaf node, which meets the primary constraint, is computed, the multicast service traffic destined for the first leaf node, from the multicast branch path computed according to the secondary constraint, to the multicast branch path meeting the primary constraint.

For another example, the multicast branch path switching unit may specifically include a link information acquiring subunit and a multicast branch path switching subunit. The link information acquiring subunit is configured to acquire network traffic engineering link information by using the Interior Gateway Protocol IGP after the multicast branch path establishing unit establishes the multicast path to the first leaf node according to the multicast branch path obtained by computation; the multicast branch path computing unit is further configured to compute a multicast branch path to the first leaf node according to the primary constraint when the acquired network traffic engineering link information changes; and the multicast branch path switching subunit is configured to switch, when a path meeting the primary constraint is computed, the multicast service traffic destined for the first leaf node, from the multicast branch path computed according to the secondary constraint, to the multicast branch path meeting the primary constraint. For example, the foregoing TE link information includes information such as bandwidth of a link and a color of a link in the network.

The apparatus for establishing a multicast path provided by the embodiment of the present invention may be specifically configured to execute the method for establishing a multicast path in Embodiment 1. The implementation principles and technical effects of the apparatus and that of the method are similar, which are not described herein again.

By using the apparatus for establishing a multicast path according to the embodiment of the present invention, when a network cannot meet a requirement that all multicast paths to all leaf nodes should be established according to a primary constraint or when an established multicast branch path is faulty, for a leaf node to which a multicast path cannot be established according to the primary constraint, a substitute multicast path is established according to a secondary constraint, which ensures that service traffic can reach all leaf nodes in a multicast service and that the multicast service for the leaf nodes is quickly recovered when a fault occurs.

A person of ordinary skill in the art may understand that all or a part of the processes of the methods in the foregoing embodiments may be implemented by a computer program instructing relevant hardware. The program may be stored in a computer readable storage medium. When the program runs, the processes of the methods in the foregoing embodiments are performed. The storage medium may include: a magnetic disk, an optical disc, a read-only memory (Read-Only Memory, ROM), or a random access memory (Random Access Memory, RAM).

The foregoing descriptions are merely exemplary implementation manners of the present invention, but are not intended to limit the protection scope of the present invention. Any variation or replacement readily figured out by a person skilled in the art within the technical scope disclosed in the present invention and without departing from the technical idea of the present invention shall fall within the protection scope of the present invention. Therefore, the protection scope of the present invention shall be subject to the protection scope of the claims.

## Claims

1. A method for establishing a multicast path, wherein the method comprises:
when computing a multicast branch path to a first leaf node by using a constraint fails, degrading the constraint to obtain a secondary constraint;
computing a multicast branch path to the first leaf node according to the secondary constraint; and
establishing a multicast path to the first leaf node according to the multicast branch path obtained by computation.

2. The method according to claim 1, wherein the degrading the constraint to obtain a secondary constraint comprises:
obtaining the secondary constraint according to a configured constraint degradation policy, wherein the constraint degradation policy specifies how to degrade the constraint.

3. The method according to claim 1 or 2, wherein before the degrading the constraint to obtain a secondary constraint, the method further comprises:
advertising, by the first leaf node by using an extended BGP Border Gateway Protocol to a root node of a multicast tree in which the first leaf node is located, whether the first leaf node supports the constraint degradation.

4. The method according to any one of claims 1 to 3, wherein the establishing a multicast path to the first leaf node according to the multicast branch path obtained by computation comprises:
sending an extended path Path message to the first leaf node, to establish the multicast path to the first leaf node, wherein the extended path Path message carries a primary constraint and the secondary constraint applied to the first leaf node.

5. The method according to any one of claims 1 to 4, wherein if the first leaf node and the root node of the multicast tree in which the first leaf node is located belong to different topological domains, a boundary node of a topological domain in which the first leaf node is located computes the multicast branch path to the first leaf node according to the secondary constraint.

6. The method according to any one of claims 1 to 5, wherein the method further comprises:
when there is a multicast branch path to the first leaf node, which meets the primary constraint, switching multicast service traffic destined for the first leaf node, from the multicast branch path computed according to the secondary constraint, to the multicast branch path meeting the primary constraint.

7. The method according to any one of claims 1 to 6, wherein when there is a multicast branch path to the first leaf node, which meets the primary constraint, the switching multicast service traffic destined for the first leaf node, from the multicast branch path computed according to the secondary constraint, to the multicast branch path meeting the primary constraint comprises:
after the establishing a multicast path to the first leaf node according to the multicast branch path obtained by computation, computing a multicast branch path to the first leaf node according to the primary constraint and a predetermined time interval; and when a multicast branch path to the first leaf node, which meets the primary constraint, is computed, establishing a multicast path to the first leaf node, which meets the primary constraint, and switching the multicast service traffic destined for the first leaf node, from the multicast branch path computed according to the secondary constraint, to the multicast branch path meeting the primary constraint.

8. The method according to any one of claims 1 to 6, wherein when there is a multicast branch path to the first leaf node, which meets the primary constraint, the switching multicast service traffic destined for the first leaf node, from the multicast branch path computed according to the secondary constraint, to the multicast branch path meeting the primary constraint comprises:
after the multicast branch path establishing unit establishes a multicast path to the first leaf node according to the multicast branch path obtained by computation, acquiring network traffic engineering link information by using the Interior Gateway Protocol IGP; when the acquired network traffic engineering link information changes, computing a multicast branch path to the first leaf node according to the primary constraint; and when a path meeting the primary constraint is computed, establishing a multicast path to the first leaf node, which meets the primary constraint, and switching the multicast service traffic destined for the first leaf node, from the multicast branch path computed according to the secondary constraint, to the multicast branch path meeting the primary constraint.

9. An apparatus for establishing a multicast path, wherein the apparatus comprises:
a secondary constraint generating unit, configured to degrade, when computing a multicast branch path to a first leaf node by using a constraint fails, the constraint to obtain a secondary constraint;
a multicast branch path computing unit, configured to compute a multicast branch path to the first leaf node according to the secondary constraint; and
a multicast branch path establishing unit, configured to establish a multicast path to the first leaf node according to the multicast branch path obtained by computation.

10. The apparatus according to claim 9, wherein the secondary constraint generating unit comprises:
a constraint degradation policy subunit, configured to configure a constraint degradation policy; and
a secondary constraint generating subunit, configured to generate a secondary constraint according to the configured constraint degradation policy.

11. The apparatus according to claim 9 or 10, wherein the multicast branch path establishing unit comprises a path Path message extending subunit, a path Path message sending subunit, and a reserve Resv message receiving subunit, wherein the path Path message extending subunit is configured to generate an extended path Path message, and the extended path Path message carries a primary constraint of a multicast tree to which the first leaf node belongs and the secondary constraint.

12. The apparatus according to any one of claims 9 to 11, wherein the apparatus further comprises a multicast branch path switching unit, configured to switch, when there is a multicast branch path to the first leaf node, which meets the primary constraint, multicast service traffic destined for the first leaf node, from the multicast branch path computed according to the secondary constraint, to the multicast branch path meeting the primary constraint.

13. The apparatus according to any one of claims 9 to 12, wherein the multicast branch path switching unit comprises:
a timer subunit, configured to provide, after the multicast branch path establishing unit establishes a multicast path to the first leaf node according to the multicast branch path obtained by computation, a timing signal for the multicast branch path computing unit according to a predetermined time interval, wherein the multicast branch path computing unit is further configured to compute a multicast branch path to the first leaf node according to the primary constraint after receiving the timing signal sent by the timer subunit; and
a multicast branch path switching subunit, configured to: when a multicast branch path to the first leaf node, which meets the primary constraint, is computed, switch the multicast service traffic destined for the first leaf node, from the multicast branch path computed according to the secondary constraint, to the multicast branch path meeting the primary constraint.

14. The apparatus according to any one of claims 9 to 13, wherein the multicast branch path switching unit comprises:
a link information acquiring subunit, configured to acquire network traffic engineering link information by using the Interior Gateway Protocol IGP, wherein the multicast branch path computing unit is further configured to compute a multicast branch path to the first leaf node according to the primary constraint when the acquired network traffic engineering link information changes; and
a multicast branch path switching subunit, configured to: when a path meeting the primary constraint is computed, switch the multicast service traffic destined for the first leaf node, from the multicast branch path computed according to the secondary constraint, to the multicast branch path meeting the primary constraint.
